# EUROPÄISCHE PATENTSCHRIFT

(11) **EP 1 328 715 B1**
(45) Veröffentlichungstag und Bekanntmachung des Hinweises auf die Patenterteilung: **21.06.2006**
(21) Anmeldenummer: 01986740.7
(22) Anmeldetag: 11.10.2001
(51) Int. Cl.: F02D 9/10, F16K 1/22

(54) **DROSSELKLAPPE**
THROTTLE-VALVE
MANCHON A PAPILLON

(30) Priorität: 12.10.2000 DE 10050393
(43) Veröffentlichungstag der Anmeldung: 23.07.2003
(73) Patentinhaber: SIEMENS AKTIENGESELLSCHAFT, 80333 München (DE)
(72) Erfinder: KOHLEN, Peter, 61267 Neu-Anspach (DE)
(86) Internationale Anmeldenummer: PCT/DE2001/003861
(87) Internationale Veröffentlichungsnummer: WO 2002/031333

(56) Entgegenhaltungen:
- EP-A- 1 065 361
- DE-A- 19 508 355
- DE-A- 19 704 012
- US-A- 3 750 698
- US-A- 4 485 010

## Beschreibung

Die Erfindung bezieht sich auf einen Drosselklappenstutzen mit einem Gehäuse, das eine von einem gasförmigen Medium in einer Hauptströmungsrichtung durchströmbare Drosselöffnung mit einem annähernd zylinderförmigen Querschnitt aufweist, wobei in der Drosselöffnung eine auf einer Drosselklappenwelle schwenkbar befestigte Drosselklappe angeordnet ist und wobei die Drosselklappenwelle von einem in dem Gehäuse angeordneten Stellantrieb verstellbar ist.

Zur Steuerung der Frischgasmenge eines Kraftfahrzeugs werden üblicherweise Drosselklappenstutzen eingesetzt. Drosselklappenstutzen umfassen ein Gehäuse mit einer Drosselöffnung und ein in der Drosselöffnung angeordnetes Drosselorgan. Das Drosselorgan nimmt für den Durchlass einer bestimmten Frischgasmenge eine bestimmte Stellung in der Drosselöffnung ein. Hierzu ist das Drosselorgan mechanisch oder elektronisch ansteuerbar.

Gehäuse von Drosselklappenstutzen werden üblicherweise aus Kunststoff oder aus Metall hergestellt. Gehäuse von Drosselklappenstutzen die aus Metall, beispielsweise Aluminium, gefertigt sind, können besonders genau gefertigt werden und können daher besonders geringe Toleranzen aufweisen. Geringe Toleranzen sind insbesondere dann für einen Drosselklappenstutzen im Bereich der Drosselklappe erforderlich, wenn die durch die Drosselöffnung des Drosselklappenstutzens hindurchtretende Menge an Strömungsmedium schon durch eine besonders geringe Bewegung der Drosselklappe beeinflußbar sein soll. Im Schließbereich der Drosselklappe werden diese Anforderungen auch Leckluftanforderungen genannt. Metallgehäuse von Drosselklappenstutzen weisen jedoch den Nachteil auf, daß nach einer Herstellung des Gehäuses, beispielsweise im Druckgußverfahren, üblicherweise eine aufwendige Nachbearbeitung des Gehäuses erforderlich ist. Beispielsweise ist eine Nachbearbeitung von Gehäusen aus Aluminium notwendig, um die im und am Gehäuse vorgesehenen funktionalen Anforderungen zu gewährleisten. Funktionale Anforderungen sind insbesondere die Drosselöffnung, die Aufnahme für den Stellantrieb und Getriebeachsabstände. Auch ist üblicherweise eine genaue Bearbeitung der Lagersitze notwendig, da erst durch den Preßsitz am Nadellager das richtige Betriebsspiel (Lagerluft) hergestellt wird.

Aus Kunststoff gefertigte Gehäuse von Drosselklappenstutzen weisen ein geringeres Gewicht auf als Gehäuse von Drosselklappenstutzen, die im wesentlichen aus Metall, insbesondere Aluminium, gefertigt sind. Weiterhin ist auch das Material Kunststoff besonders einfach an verschiedenste geometrische Ausprägungen des Gehäuses anpaßbar. Bei im Spritzgußverfahren hergestellten Kunststoffgehäusen können außerdem Einsätze, beispielsweise Lager für die Lagerung der Drosselklappenwelle, in das Gehäuse eingespritzt werden.

Drosselklappen, die beispielsweise einen Durchmesser von bis zu 90 mm und mehr aufweisen besitzen eine geringere Festigkeit als Drosselklappen, die beispielsweise nur einen Durchmesser von bis zu 40 mm aufweisen. Bei einer Drosselklappe mit einem besonders großen Durchmesser tritt daher im geschlossenen Zustand der Drosselklappe deutlich mehr gasförmiges Medium, die sogenannte Leck- oder Verbißluft, durch die Drosselöffnung als bei einer Drosselklappe mit einem im Vergleich dazu besonders kleinen Durchmesser. Die geringere Festigkeit einer Drosselklappe mit einem vergleichsweise großen Durchmesser hat außerdem zur Folge, daß sich der Durchsatz des gasförmigen Mediums durch die Drosselöffnung nicht so fein steuern läßt, wie das bei einer Drosselklappe mit einem vergleichsweise deutlich geringeren Durchmesser der Fall ist. Auch neigen Drosselklappen mit einem besonders großen Durchmesser aufgrund des geringen Maßes an Festigkeit eher dazu zu verschleißen, als Drosselklappen mit einem im Vergleich dazu besonders kleinen Durchmesser.

Der Erfindung liegt daher die Aufgabe zugrunde, einen Drosselklappenstutzen der oben genannten Art anzugeben, dessen Drosselklappe ein besonders hohes Maß an Festigkeit aufweist und gleichzeitig eine besonders geringe Neigung zum Verschleiß zeigt.

Diese Aufgabe wird erfindungsgemäß dadurch gelöst, daß die Drosselklappe einen zumindest teilweise radial umlaufenden ringartigen ersten Bereich aus einem ersten Material und einen annähernd kreisförmigen radialen zweiten Bereich aus einem zweiten Material aufweist, wie zum ßeispiel im DE 195 08 355 zu sehen ist wobei der erste Bereich den zweiten Bereich zumindest teilweise umschließt und wobei das erste Material der Drosselklappe eine höhere Festigkeit aufweist als das zweite Material der Drosselklappe.

Die Erfindung geht dabei von der Überlegung aus, daß eine Drosselklappe, die ein besonders hohes Maß an Festigkeit und eine besonders geringe Neigung zum Verschleiß aufweist, zusätzlich verstärkt sein sollte. Dabei sollte jedoch aus wirtschaftlichen Erwägungen heraus die Drosselklappe standardmäßig produzierbar sein. Um nun mit besonders geringem Aufwand die Drosselklappe zusätzlich zu stabilisieren, sollte eine zusätzliche Maßnahme ausreichen, um der Drosselklappe das erforderliche zusätzliche Maß an Steifigkeit zu verleihen. Berechnungen haben ergeben, daß die Drosselklappe dann ein besonders hohes Maß an Steifigkeit aufweist, wenn die Drosselklappe einen ersten Bereich und einen zweiten Bereich aufweist, wobei der erste Bereich der Drosselklappe zusätzlich stabilisiert ist. Hierzu ist der erste Bereich der Drosselklappe aus einem ersten Material gebildet, das steifer als das zweite Material des zweiten Bereichs der Drosselklappe ist.

Vorteilhafterweise ist der erste Bereich ein äußerer Bereich und der zweite Bereich ein innerer Bereich. Ein äußerer erster Bereich kann dabei beispielsweise zusätzlich an der Drosselklappe angeordnet werden. Durch einen äußeren und einen inneren Bereich der Drosselklappe sind die Bereiche verschiedener Festigkeit besonders einfach bereitzustellen.

Der zweite Bereich ist vorteilhafterweise in einen Kreisbereich und einen Randbereich unterteilt, wobei der erste Bereich zwischen dem Kreisbereich und dem Randbereich des zweiten Bereichs angeordnet ist. Durch einen annähernd ringförmigen ersten Bereich weist die Drosselklappe auch bei besonders großen Durchmessern ein besonders hohes Maß an Steifigkeit auf, wobei der Randbereich der Drosselklappe unverändert bleibt.

Vorteilhafterweise weist die Drosselklappe im ersten Bereich eine geringere Dicke als im zweiten Bereich auf. Mit einer vergleichsweise geringeren ersten Dicke D1 im ersten Bereich und einer zweiten Dicke D2 im zweiten Bereich der Drosselklappe läßt sich ausgehend von der Schließstellung der Drosselklappe schon durch eine geringe Bewegung der Drosselklappenwelle und damit der Drosselklappe der Durchsatz des gasförmigen Mediums durch die Drosselöffnung beeinflussen. Hierdurch ist also besonders zuverlässig eine besonders fein abgestufte Steuerung der durch die Drosselöffnung hindurchtretenden Menge an gasförmigen Medium gewährleistet.

Der erste Bereich und der zweite Bereich der Drosselklappe sind vorteilhafterweise einstückig aus einem Werkstoff gebildet, wobei das erste Material der Drosselklappe im ersten Bereich verdichteter Werkstoff und das zweite Material der Drosselklappe im zweiten Bereich unverdichteter Werkstoff ist. Verdichtete Werkstoffe weisen üblicherweise eine deutlich höhere Festigkeit oder Steifigkeit auf als Werkstoffe, die nicht verdichtet worden sind. Um dem ersten Bereich ein höheres Maß an Festigkeit als dem zweiten Bereich zu verleihen, wird der erste Bereich der Drosselklappe in einem zusätzlichen Fertigungsschritt verdichtet. Die Dicke D1 kann dabei in die Drosselklappe eingeprägt sein. Mittels eines Einprägungsverfahrens läßt sich in besonders einfacher und wirtschaftlicher Weise eine besonders hohe Festigkeit des ersten Bereichs der Drosselklappe gewährleisten.

Vorteilhafterweise ist der Werkstoff der Drosselklappe Metall, insbesondere Aluminium. Aluminium läßt sich besonders einfach bearbeiten und aufgrund seiner Weichheit besonders gut verdichten.

Die Drosselklappenwelle weist zur Befestigung der Drosselklappenwelle einen Schlitz auf, wobei die durch den Schlitz hindurch geschobene Drosselklappe beidseitig des Schlitzes von der Drosselklappenwelle absteht, so daß ein Teilbereich der Drosselklappe von der Drosselklappenwelle in dem Schlitz umschlossen ist. Hierbei erweist es sich als vorteilhaft, wenn der erste Bereich von dem Teilbereich unterbrochen ist. Dadurch ist die Drosselklappe einerseits zuverlässig in dem Schlitz der Drosselklappenwelle gesichert und weist dennoch einen ersten Bereich mit einer erhöhten Festigkeit auf, der eine besonders lange Lebensdauer der Drosselklappe zuverlässig gewährleistet.

Die mit der Erfindung erzielten Vorteile liegen insbesondere darin, daß mittels durch eine zusätzliche Versteifung des ersten Bereichs der Drosselklappe die Drosselklappe ein besonders hohes Maß an Festigkeit aufweist und besonders unanfällig gegen Verschleiß ist. Hierdurch ist zuverlässig gewährleistet, daß auch bei einer besonders langen Lebensdauer des Drosselklappenstutzens die Kennlinie des Drosselklappenstutzens nahezu unverändert bleibt.

Ein Ausführungsbeispiel der Erfindung wird anhand einer Zeichnung näher erläutert. Darin zeigen:
- Figur 1: schematisch einen Drosselklappenstutzen im Querschnitt,
- Figur 2: schematisch den Drosselklappenstutzen Figur 1 im Längsschnitt,
- Figur 3: schematisch den Drosselklappenstutzen gemäß Figur 1 im Längsschnitt in perspektivischer Darstellung,
- Figur 4: schematisch eine Drosselklappe gemäß den Figuren 1, 2 und 3 in einer ersten Ausführungsform,
- Figur 5: schematisch einen Ausschnitt des Drosselklappenstutzens gemäß den Figuren 1, 2 und 3 und
- Figur 6: schematisch eine Drosselklappe in einer zweiten Ausführungsform.

Einander entsprechende Teile sind in allen Figuren mit den gleichen Bezugszeichen versehen.

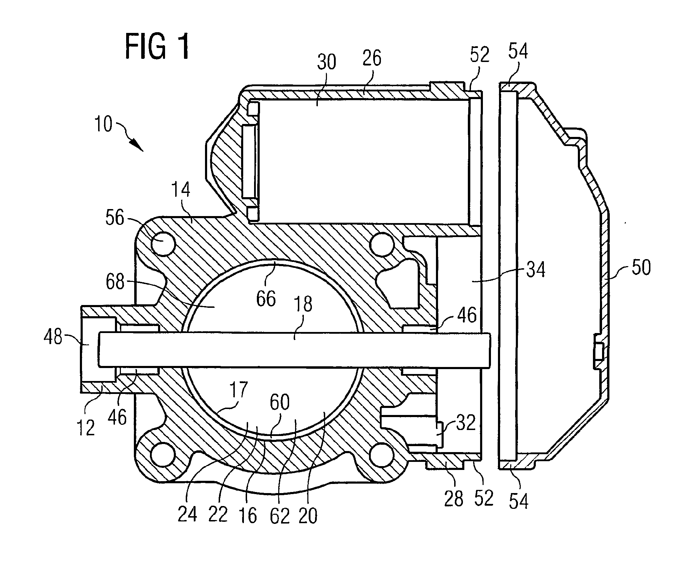

Der Drosselklappenstutzen 10 gemäß Figur 1 dient dazu, einem nicht dargestellten Verbraucher, bspw. einer Einspritzeinrichtung eines ebenfalls nicht dargestellten Kraftfahrzeugs, ein Luft- oder Kraftstoff- Luft- Gemisch zuzuführen, wobei mittels des Drosselklappenstutzens 10 die dem Verbraucher zuzuführende Frischgasmenge steuerbar ist. Hierzu weist der Drosselklappenstutzen 10 ein Gehäuse 12 auf, das aus Metall 14 gefertigt ist, das in diesem Ausführungsbeispiel als Aluminium ausgebildet ist. Alternativ kann das Gehäuse 12 jedoch auch aus Kunststoff im Spritzgussverfahren hergestellt worden sein. Das Gehäuse 12 umfaßt eine durchgehende Drosselöffnung 16, die einen annähernd zylinderförmigen Querschnitt 17 aufweist. Über die Drosselöffnung 16 ist dem nicht dargestellten Verbraucher Luft- bzw. ein Kraftstoff- LuftGemisch zuführbar.

Zur Einstellung des dem Verbraucher zuzuführenden Volumens an Frischgas ist auf einer Drosselklappenwelle 18 eine Drosselklappe 20 angeordnet. Die Drosselklappe 20 ist aus einem Werkstoff 22 gefertigt, der in diesem Ausführungsbeispiel als Metall 24 ausgebildet ist. Das Metall 24 wiederum ist Aluminium. Eine Drehung der Drosselklappenwelle 18 bewirkt gleichzeitig eine Verschwenkung der auf der Drosselklappenwelle 18 angeordneten Drosselklappe 20, wodurch der aktive Querschnitt der Drosselöffnung 16 vergrößert oder verkleinert wird. Mittels einer Vergrößerung oder Verkleinerung des aktiven Querschnitts der Drosselöffnung 16 durch die Drosselklappe 20 erfolgt eine Regulierung des Durchsatzes des Luft- bzw. Kraftstoff- Luft- Gemisches durch die Drosselöffnung 16 des Drosselklappenstutzens 10.

Die Drosselklappenwelle 18 kann mit einer nicht näher dargestellten Seilscheibe verbunden sein, die wiederum über einen Bowdenzug mit einer Einstellvorrichtung für eine Leistungsanforderung verbunden ist. Die Einstellvorrichtung kann hierbei als Gaspedal eines Kraftfahrzeugs ausgebildet sein, so dass eine Betätigung dieser Einstellvorrichtung durch den Fahrer des Kraftfahrzeugs die Drosselklappe 20 von einer Stellung minimaler Öffnung, insbesondere einer Schließstellung, bis in eine Stellung maximaler Öffnung, insbesondere einer Offenstellung gebracht werden kann, um hierdurch die Leistungsabgabe des Kraftfahrzeugs zu steuern.

Die in Figur 1 gezeigte Drosselklappenwelle 18 des Drosselklappenstutzens 10 ist im Gegensatz dazu entweder in einem Teilbereich von einem Stellantrieb und ansonsten über das Gaspedal einstellbar oder aber die Drosselklappe 20 ist über den gesamten Verstellbereich von einem Stellantrieb einstellbar. Bei diesen sogenannten E-Gas oder Drive-by-wire-Systemen wird die mechanische Leistungssteuerung, bspw. das Niederdrücken eines Gaspedals, in ein elektrisches Signal umgesetzt. Dieses Signal wird wiederum einer Steuereinheit zugeführt, die ein Ansteuersignal für den Stellantrieb erzeugt. Es gibt bei diesen Systemen im Normalbetrieb keine mechanische Kopplung zwischen dem Gaspedal und der Drosselklappe 20.

Zur Verstellung der Drosselklappenwelle 18 und damit der Drosselklappe 20 weist daher der Drosselklappenstutzen 10 ein Antriebsgehäuse 26 und ein Getriebegehäuse 28 auf. Das Antriebsgehäuse 26 und das Getriebegehäuse 28 sind einstückig mit dem Gehäuse 12 des Drosselklappenstutzens 10 ausgeführt, sie können aber auch insgesamt eine separate einstückige Baueinheit bilden, oder aber jedes für sich einstückig ausgeführt sein. In dem Antriebsgehäuse 26 ist ein als Elektromotor ausgebildeter Stellantrieb 30 angeordnet. In dem Getriebegehäuse 28 ist einerseits eine Positionserfassungseinrichtung 32 und andererseits ein Getriebe 34 angeordnet. Mittels der Positionserfassungseinrichtung 32 ist die jeweils aktuelle Position der Drosselklappenwelle 18 erfaßbar. Das Getriebe 34 ist als Untersetzungsgetriebe ausgebildet und dient zur Übertragung der Drehbewegung des als Elektromotor ausgebildeten Stellantriebs 30 auf die Drosselklappenwelle 18. Die Positionserfassungseinrichtung 32 und das Getriebe 34 sind in der Zeichnung nicht näher dargestellt.

Die Ansteuerung des als Elektromotor ausgebildeten Stellantriebs 30 erfolgt über eine Steuereinheit, die ebenfalls nicht in der Zeichnung dargestellt ist. Die Steuereinheit übermittelt dem als Elektromotor ausgebildeten Stellantrieb 30 ein Signal, mittels dessen der als Elektromotor ausgebildete Stellantrieb 30 die Drosselklappenwelle 18 über das als Untersetzungsgetriebe ausgebildete Getriebe 34 verstellt. Die tatsächliche Position der Drosselklappenwelle 18 ist über die Positionserfassungseinrichtung 32 erfasst. Die Positionserfassungseinrichtung 32 ist hierfür als Potentiometer ausgeführt, bei dem der Schleifer des Potentiometers mit der Drosselklappenwelle 18 verbunden ist.

Die Drosselklappenwelle 18 ist in Lagern 46 gelagert, die beidseitig der Drosselöffnung 16 in dem Gehäuse 12 angeordnet sind. Die Drosselklappenwelle 18 endet auf der einen Seite - gemäß Figur 1 auf der linken Seite - in einen Raum 48, in dem bspw. ein Federsystem mit sogenannten Rückstellfedern und/oder Notlauffedern untergebracht sein kann. Die Rückstellfedern und/oder Notlauffedern können alternativ jedoch auch in dem Bereich untergebracht sein, in dem die Rückstellfedern und/oder Notlauffedern angeordnet sind. Die Rückstellfedern und/oder Notlauffedern des Federsystems bewirken eine Vorspannung der Drosselklappenwelle 18 in Schließrichtung, so dass der als Elektromotor ausgebildete Stellantrieb 30 gegen die Kraft der Rückstellfedern und/oder Notlauffedern arbeitet. Eine sogenannte Rückstellfeder und/oder Notlauffeder des Federsystems bewirkt, daß bei einem Ausfall des als Elektromotor ausgebildeten Stellantriebs 30 die Drosselklappe 20 in eine definierte Position gebracht wird, die üblicherweise oberhalb der Leerlaufdrehzahl liegt.

Alternativ oder zusätzlich kann die Drosselklappenwelle 18 auch über den Raum 48 hinaus aus dem Gehäuse 12 des Drosselklappenstutzens 10 hervorstehen. Dann ist es möglich, bspw. eine in der Zeichnung nicht dargestellte Seilscheibe am Ende der Drosselklappenwelle 18 zu montieren, die über einen Bowdenzug mit einem Gaspedal verbunden ist, womit eine mechanische Sollwertvorgabe realisiert wird. Diese mechanische Kopplung der Drosselklappenwelle 18 mit dem in der Zeichnung nicht näher dargestellten Gaspedal kann in Notsituationen, bspw. bei einem Ausfall des Stellantriebs, einen Betrieb des Drosselklappenstutzens 10 gewährleisten. Weiterhin können an dem Gehäuse 12 weitere Ansätze angeordnet sein, die zur Aufnahme zusätzlicher Elemente vorgesehen sind, wie bspw. Steckwellen für Zahnräder oder Zahnsegmente des nicht gezeigten Getriebes, das als Untersetzungsgetriebe ausgebildet ist. Auch können in dem Raum 48 weitere Elemente des Drosselklappenstutzens 10 angeordnet sein.

Das Gehäuse 12 des Drosselklappenstutzens 10 ist von einem Gehäusedekkel 50 verschließbar. Hierzu weist das Gehäuse 12 des Drosselklappenstutzens 10 in Richtung des Gehäusedeckels 50 eine umlaufende Abflachung 52 auf, die mit einem umlaufenden Steg 54 des Gehäusedeckels 50 korrespondiert. Die Abflachung 52 und der Steg 54 gewährleisten eine wohldefinierte Lage des Gehäusedeckels 50 auf dem Gehäuse 12. Der Gehäusedeckel 50 ist auf das Gehäuse 12 aufgeklebt. Alternativ kann der Gehäusedeckel 50 jedoch auch auf das Gehäuse 12 aufgeclipst oder in anderer Weise fest mit diesem verbunden sein. Weiterhin weist das Gehäuse 12 Flanschaugen 56 zur Verbindung mit außerhalb des Drosselklappenstutzens 10 angeordneten Elementen auf, die einstückig mit dem Gehäuse 12 ausgeführt sind.

Beim Betrieb des Drosselklappenstutzens 10 wird mittels des als Elektromotor ausgebildeten Stellantriebs 30 dies Drosselklappenwelle 18 verschwenkt. Hierdurch gibt die auf der Drosselklappenwelle 18 befestigte Drosselklappe 20 die Drosselöffnung mehr oder weniger frei, wodurch die dem Verbrennungsmotor zuzuführende Frischgasmenge steuerbar ist. Damit die Drosselklappe 20 für diese Funktion ein besonders hohes Maß an Festigkeit aufweist, ist die Drosselklappe 20 in einen zumindest teilweise annähernd ringförmigen ersten Bereich 60 und einen annähernd kreisförmigen zweiten Bereich 62 sowie einen Teilbereich 64 unterteilt. Hierbei umschließt der erste Bereich 60 den zweiten Bereich 62 zumindest teilweise.

Der erste Bereich 60, der zweite Bereich 62 und der Teilbereich 64 sind einstückig ausgeführt und aus dem als Metall 24 ausgebildeten Werkstoff 22 gefertigt. Das Metall 24 ist dabei in diesem Ausführungsbeispiel Aluminium. Der erste Bereich 60 ist dabei aus einem ersten Material 66 gefertigt, das als verdichtetes Metall 24, also verdichtetes Aluminium ausgebildet ist. Der zweite Bereich 62 ist aus einem zweiten Material 68 gefertigt, das als unverdichtetes Metall 24, also unverdichtetes Aluminium, ausgebildet ist. Damit ist das erste Material 66 der Drosselklappe 20 fester als das zweite Material 68 der Drosselklappe 20. Der Teilbereich 64 ist ebenfalls aus dem zweiten Material 68 gefertigt. Der Teilbereich 64 ist in Figur 1 aufgrund der Schnittdarstellung nicht zu sehen.

Die Drosselklappe 20 ist bei der Herstellung aus einem Aluminiumstück herausgeschnitten worden, überlicherweise mit einem Schrägungswinkel in Bezug auf das Aluminiumstück. Anschließend ist mittels eines Preßverfahrens der erste Bereich 60 in die Drosselklappe 20 eingeprägt worden. Hierdurch weisen der zweite Bereich 62 und der Teilbereich 64 unverdichtetes Metall 24 als Werkstoff 22 und der erste Bereich 60 verdichtetes Metall 24 als Werkstoff 22 auf.

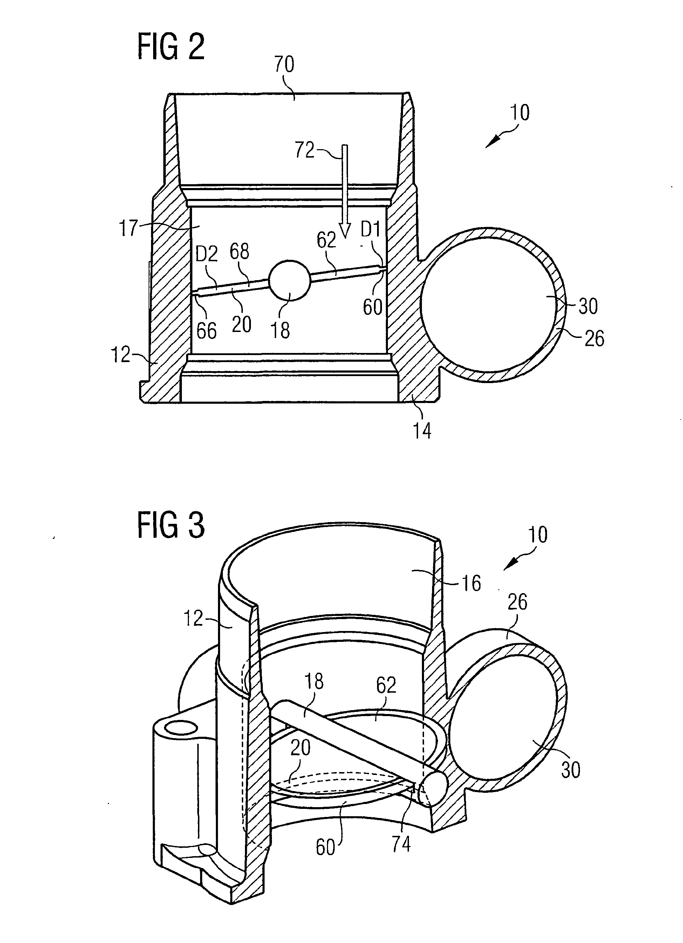

Figur 2 zeigt schematisch einen Längsschnitt durch den Drosselklappenstutzen 10 gemäß Figur 1. Die durchgehende Drosselöffnung 16 des Drosselklappenstutzens 10 ist von einem gasförmigen Medium 70 in einer Hauptströmungsrichtung 72 durchströmbar. Die Menge an Durchsatz des gasförmigen Mediums 70 durch die Drosselöffnung 16 wird mit Hilfe der Stellung der Drosselklappe 20 gesteuert. Damit die Drosselklappe 20 hierfür ein besonders hohes Maß an Festigkeit aufweist, ist die Drosselklappe 20 in einen zumindest teilweise annähernd ringförmigen ersten Bereich 60 aus dem ersten Material 66 und einen annähernd kreisförmigen zweiten Bereich 62 aus dem zweiten Material 68 unterteilt. Das erste Material 66 der Drosselklappe 20 ist verdichtetes Aluminium. Daher weist der erste Bereich 60 der Drosselklappe 20 eine geringere Dicke D1 auf als der Restbereich 66 der Drosselklappe 20, der eine Dicke D2 aufweist. Durch den verdichteten ersten Bereich 60, der in die Drosselklappe 20 eingeprägt ist, ist die Drosselklappe 20 besonders verschleißunanfällig.

Gemäß der Darstellung des Drosselklappenstutzens 10 gemäß Figur 3 ist die Drosselklappe 20 durch einen Schlitz 74 der Drosselklappenwelle 18 hindurchgeschoben und steht beidseitig des Schlitzes 74 von der Drosselklappenwelle 18 ab, wobei der Teilbereich 64 der Drosselklappe 20 von der Drosselklappenwelle 18 in dem Schlitz 74 umschlossen ist. Da die Drosselklappe 18 in dem von der Drosselklappenwelle 18 umschlossenen Teilbereich 64 üblicherweise durch die Drosselklappenwelle 18 ausreichend stabilisiert ist, ist der erste Bereich 60, der aus verdichtetem Werkstoff 22 gefertigt ist, aus unverdichtetem Werkstoff 22 gefertigt. Der erste Bereich 60 ist also von dem Teilbereich 64 unterbrochen. Auch in dieser Figur 3 ist der Teilbereich 64 von dem Schlitz 74 verdeckt und daher nicht zu sehen.

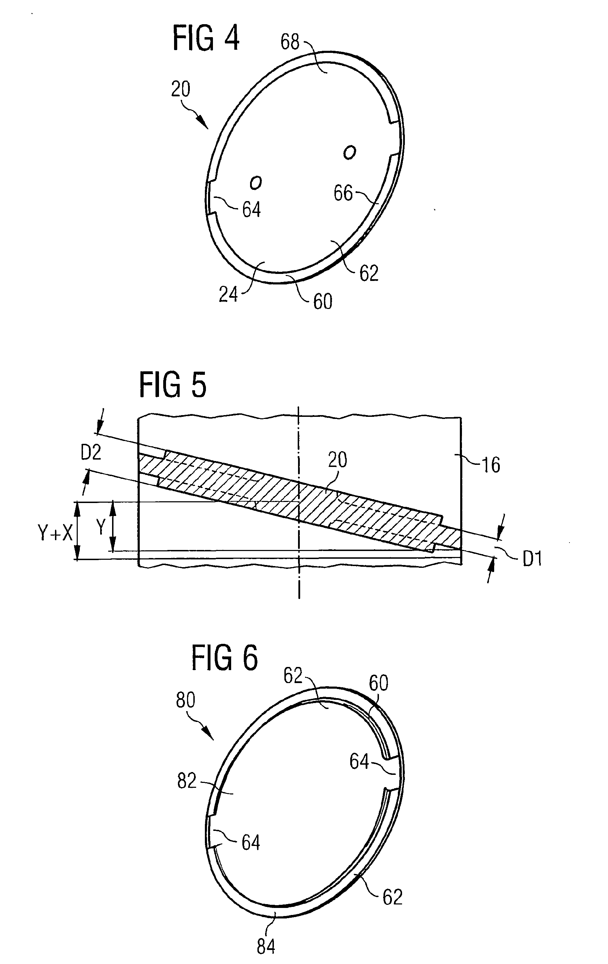

Die Drosselklappe 20 gemäß Figur 4 ist als einzelnes Bauteil dargestellt und entspricht den Drosselklappen 20 der Figuren 1, 2 und 3. In dieser Darstellung ist erkennbar, daß der Teilbereich 64 der Drosselklappe 20, der bei der Montage der Drosselklappe 20 in dem Schlitz 74 der Drosselklappenwelle 18 anzuordnen ist, annähernd den gleichen Durchmesser D2 aufweist, den auch der übrige zweite Bereich 62 der Drosselklappe 24 aufweist.

Figur 5 zeigt schematisch einen Ausschnitt des Drosselklappenstutzens 10 gemäß den Figuren 1 und 2. Durch die geringere Dicke D1 des ersten Bereichs 60 der Drosselklappe 20 weist nun die Drosselklappe 20 gegenüber einer Drosselklappe ohne einen verdichteten ersten Bereich 60 die Eigenschaft auf, daß schon mit einer besonders geringen Bewegung der Drosselklappe 20 aus ihrer Schließstellung heraus in Richtung einer Offenstellung der Durchsatz des gasförmigen Mediums 70 durch die annähernd zylinderförmige Drosselöffnung 16 steuerbar ist. Dies ist angedeutet durch die eingezeichneten Strecken Y und X + Y.

Die Strecke Y geht vom Mittelpunkt der Drosselklappenwelle 18 bis zu dem Punkt, an dem die Drosselklappe 20 mit ihrer geringeren Dicke D1 die Wandung der Drosselöffnung 16 berührt. Die Strecke X + Y geht vom Mittelpunkt der Drosselklappenwelle 18 bis zu dem imaginären Punkt, an dem eine Drosselklappe, die durchgängig eine Dicke D2 aufweist, die Wandung der Drosselöffnung 16 berühren würde. Die im ersten Bereich die Dicke D2 aufweisende Drosselklappe 20 beeinflußt also schon in dem Bewegungsbereich der Drosselklappe 20 zwischen Y und X + Y die durch die Drosselöffnung 16 hindurchtretende Menge an gasförmigem Medium wohingegen die imaginäre Drosselklappe mit der durchgängigen Dicke D2 erst in einem Bewegungsbereich, der größer als X + Y ist, die durch die Drosselöffnung hindurchtretende Menge an gasförmigem Medium beeinflussen würde.

Damit weist die Kennlinie eines Drosselklappenstutzens 10 mit einer Drosselklappe 20, die eine erste geringere Dicke D1 und eine zweite größere Dicke D2 umfaßt, einen größeren Arbeitsbereich auf als die Kennlinie eines imaginären Drosselklappenstutzens mit einer imaginären Drosselklappe, die durchgängig eine Dicke D2 aufweist. Die Kennlinie eines Drosselklappenstutzens bezeichnet dabei die Abhängigkeit des Drehwinkels der Drosselklappenwelle von der Masse des gasförmigen Mediums, das bei einem bestimmten Drehwinkel der Drosselklappenwelle oder Öffnungswinkel der Drosselklappe durch die Drosselöffnung hindurchtritt. Hierdurch ist der Durchsatz des gasförmigen Mediums 60 durch die Drosselöffnung 16 feiner steuerbar, als es bei einer herkömmlichen Drosselklappe der Fall ist.

Figur 6 zeigt schematisch eine einzelne Drosselklappe 80, die nicht den Drosselklappen der Figuren 1, 2, 3, 4 und 5 entspricht. Bei der Drosselklappe 80 gemäß Figur 6 ist der zweite Bereich 62 in einen Kreisbereich 82 und einen Randbereich 84 unterteilt, wobei der erste Bereich 60 zwischen dem Kreisbereich 82 und dem Randbereich 84 des zweiten Bereichs 62 angeordnet ist. In dieser Ausführungsform weist die Drosselklappe 80 ein besonders hohes Maß an Festigkeit durch den ersten Bereich 60 auf, der aus einem ersten Material 66 gefertigt ist, das eine größere Festigkeit als das zweite Material 68 des zweiten Bereichs 62 aufweist. Auch die Drosselklappe 80 weist dabei einen Teilbereich 64 auf, der aus dem zweiten Material 68 besteht. Eine derartige Drosselklappe ist beispielsweise in Kraftfahrzeugen einsetzbar, die eine Drosselklappe mit einem besonders großen Durchmesser aufgrund eines besonders großen Durchsatzes an gasförmigem Medium erfordern, bei denen aber eine besonders feine Abstufung des Arbeitsbereichs des Drosselklappenstutzens nicht zwingend erforderlich ist.

Durch das höhere Maß an Festigkeit, das der erste Bereich 60 der Drosselklappe 20 im Vergleich zum zweiten Bereich 62 und dem Teilbereich 64 aufweist, ist besonders zuverlässig gewährleistet, daß die Drosselklappe 20 auch bei besonders großen Durchmessern eine besonders geringe Neigung zum Verschleiß zeigt. Dabei ist durch die Festigkeit des Randbereichs 60 der Drosselklappe 20 besonders zuverlässig ein besonders geringes Maß an Leckluft oder Verbißluft gewährleistet, wenn die Drosselklappe 20 ihre Schließstellung einnimmt. Mittels eines einfachen zusätzlichen Fertigungsschritts weist die Drosselklappe 20 ein besonders hohes Maß an Festigkeit auf und ist damit gleichzeitig besonders unanfällig gegen Verschleiß. Hierdurch ist zuverlässig gewährleistet, daß die Kennlinie des Drosselklappenstutzens 10 auch bei einer besonders langen Lebensdauer des Drosselklappenstutzens 10 annähernd unverändert bleibt.

## Patentansprüche

1. Drosselklappenstutzen (10) mit einem Gehäuse (12), das eine von einem gasförmigen Medium (70) in einer Hauptströmungsrichtung (72) durchströmbare Drosselöffnung (16) mit einem annähernd zylinderförmigen Querschnitt (17) aufweist, wobei in der Drosselöffnung (16) eine auf einer Drosselklappenwelle (18) schwenkbar befestigte Drosselklappe (20, 80) angeordnet ist und wobei die Drosselklappenwelle (18) von einem in dem Gehäuse (12) angeordneten Stellantrieb (30) verstellbar ist, wobei die Drosselklappe (20, 80) einen zumindest teilweise radial umlaufenden ringartigen ersten Bereich (60) aus einem ersten Material (66) und einen annähernd kreisförmigen radialen zweiten Bereich (62) aus einem zweiten Material (68) aufweist, wobei der erste Bereich (60) den zweiten Bereich (62) zumindest teilweise umschließt **dadurch gekennzeichnet, daß** das erste Material (66) der Drosselklappe (20, 80) eine höhere Festigkeit aufweist als das zweite Material (68) der Drosselklappe (20, 80).

2. Drosselklappenstutzen (10) nach Anspruch 1 **dadurch gekennzeichnet, daß** der erste Bereich (60) ein äußerer Bereich und der zweite Bereich (62) ein innerer Bereich ist.

3. Drosselklappenstutzen (10) nach Anspruch 1 **dadurch gekennzeichnet, daß** der zweite Bereich (62) in einen Kreisbereich (82) und einen Randbereich (84) unterteilt ist, wobei der erste Bereich (60) zwischen dem Kreisbereich (82) und dem Randbereich (84) des zweiten Bereichs (62) angeordnet ist.

4. Drosselklappenstutzen () nach einem der Ansprüche 1 bis 3 **dadurch gekennzeichnet, daß** die Drosselklappe (20, 80) im ersten Bereich (60) eine geringere Dicke als im zweiten Bereich (62) aufweist.

5. Drosselklappenstutzen (10) nach einem der Ansprüche 1 bis 4 **dadurch gekennzeichnet, daß** der erste Bereich (60) und der zweite Bereich (62) der Drosselklappe (20, 80) einstückig aus einem Werkstoff (22) gebildet sind, wobei im ersten Bereich (60) der Drosselklappe (20, 80) das erste Material (66) verdichteter Werkstoff (22) und im zweiten Bereich (62) der Drosselklappe (20, 80) das zweite Material (68) unverdichteter Werkstoff () ist.

6. Drosselklappenstutzen (10) nach Anspruch 5 **dadurch gekennzeichnet, daß** der Werkstoff (22) der Drosselklappe (20, 80) Metall (24) ist, insbesondere Aluminium.

7. Drosselklappenstutzen (10) nach einem der Ansprüche 1 bis 6 bei dem die Drosselklappenwelle (18) zur Befestigung der Drosselklappe (20, 80) einen Schlitz (74) aufweist, wobei die durch den Schlitz (74) hindurch geschobene Drosselklappe (20, 80) beidseitig des Schlitzes (74) von der Drosselklappenwelle (18) absteht, so daß ein Teilbereich (64) der Drosselklappe (20, 80) von der Drosselklappenwelle (18) in dem Schlitz (74) umschlossen ist **dadurch gekennzeichnet, daß** der erste Bereich (60) von dem Teilbereich (64) unterbrochen ist.

## Claims

1. Throttle connection fitting (10) having a housing (12) which has a throttle opening (16), of approximately cylindrical cross section (17), which can be flowed through by a gaseous medium (70) in a main flow direction (72), wherein the throttle opening (16) contains a throttle valve (20, 80), pivotably fastened on a throttle valve shaft (18), and the throttle valve shaft (18) is adjustable by a servo drive (30) disposed in the housing (12), the throttle valve (20, 80) having an at least partially radially circumferential, ring-like first region (60) made of a first material (66) and an approximately circular radial second region (62) made of a second material (68), the first region (60) at least partially enclosing the second region (62), **characterized in that** the first material (66) of the throttle valve (20, 80) has a higher strength than the second material (68) of the throttle valve (20, 80).

2. Throttle connection fitting (10) according to Claim 1, **characterized in that** the first region (60) is an outer region and the second region (62) is an inner region.

3. Throttle connection fitting (10) according to Claim 1, **characterized in that** the second region (62) is divided into a circular zone (82) and a marginal zone (84), the first region (60) being disposed between the circular zone (82) and the marginal zone (84) of the second region (62).

4. Throttle connection fitting (10) according to one of Claims 1 to 3, **characterized in that** the throttle valve (20, 80) has in the first region (60) a smaller thickness than in the second region (62).

5. Throttle connection fitting (10) according to one of Claims 1 to 4, **characterized in that** the first region (60) and the second region (62) of the throttle valve (20, 80) are formed in one piece from a work material (22), in the first region (60) of the throttle valve (20, 80) the first material (66) being compressed work material (22) and in the second region (62) of the throttle valve (20, 80) the second material (68) being non-compressed work material (22) .

6. Throttle connection fitting (10) according to Claim 5, **characterized in that** the work material (22) of the throttle valve (20, 80) is metal (24), in particular aluminium.

7. Throttle connection fitting (10) according to one of Claims 1 to 6, in which the throttle valve shaft (18) has a slot (74) for the fastening of the throttle valve (20, 80), the throttle valve (20, 80) which has been pushed through the slot (74) protruding from the throttle valve shaft (18) on both sides of the slot (74), so that a part-region (64) of the throttle valve (20, 80) is enclosed in the slot (74) by the throttle valve shaft (18), **characterized in that** the first region (60) is interrupted by the part-region (64).

## Revendications

1. Tubulure (10) à papillon de régulation des gaz avec un corps de tubulure (12) comportant une ouverture (16) qui est traversée dans une direction principale (72) d'écoulement par un fluide (70) à l'état gazeux et qui a une section transversale (17) approximativement cylindrique, où un papillon de régulation des gaz (20, 80), fixé pivotant sur un arbre (18) de papillon de régulation des gaz, est disposé dans l'ouverture (16) de la tubulure, où l'arbre (18) du papillon de régulation des gaz peut être réglé par un actionneur (30) monté dans le corps de tubulure (12), où le papillon de régulation des gaz (20, 80) a une première partie (60) de type annulaire se développant au moins partiellement dans le sens radial et composée d'une première matière (66) et une deuxième partie (62) approximativement circulaire et composée d'une deuxième matière (68), où la première partie (60) entoure au moins partiellement la deuxième partie (62), **caractérisée en ce que** la première matière (66) du papillon de régulation des gaz (20, 80) a une résistance mécanique plus élevée que la deuxième matière (68) du papillon de régulation des gaz (20, 80).

2. Tubulure (10) à papillon de régulation des gaz selon la revendication 1 **caractérisée en ce que** la première partie (60) est une partie extérieure et la deuxième partie (62), une partie intérieure.

3. Tubulure (10) à papillon de régulation des gaz selon la revendication 1 **caractérisée en ce que** la deuxième partie (62) est divisée en une zone circulaire (82) et une zone de bordure (84), la première partie (60) étant disposée entre la zone circulaire (82) et la zone de bordure (84) de la deuxième partie.

4. Tubulure (10) à papillon de régulation des gaz selon l'une des revendications 1 à 3 **caractérisée en ce que** le papillon de régulation des gaz (20, 80) a, dans la première partie (60), une épaisseur plus faible que celle de la deuxième partie (62).

5. Tubulure (10) à papillon de régulation des gaz selon l'une des revendications 1 à 4 **caractérisée en ce que** la première partie (60) et la deuxième partie (62) du papillon de régulation des gaz (20, 80) sont formées en une seule pièce en une matière première (22), où, dans la première partie (60) du papillon de régulation des gaz (20, 80), la première matière (66) est une matière première (22) condensée et, dans la deuxième partie (62) du papillon de régulation des gaz (20, 80), la deuxième matière (68) est une matière première (22) non condensée.

6. Tubulure (10) à papillon de régulation des gaz selon la revendication 5 **caractérisée en ce que** la matière première (22) du papillon de régulation des gaz (20, 80) est du métal (24) et notamment, de l'aluminium.

7. Tubulure (10) à papillon de régulation des gaz selon l'une des revendications 1 à 6 dans laquelle l'arbre (18) du papillon de régulation des gaz destiné à la fixation du papillon de régulation des gaz (20, 80) a une fente (74), le papillon de régulation des gaz (20, 80) glissé à travers la fente (74) dépassant de l'arbre (18) du papillon de régulation des gaz des deux côtés de la fente (74), si bien qu'une zone partielle (64) du papillon de régulation des gaz (20, 80) est entourée par l'arbre (18) du papillon de régulation des gaz dans la fente (74), **caractérisée en** c e que la première partie (60) est interrompue par la zone partielle (64).
